# EUROPEAN PATENT APPLICATION

(11) **EP 2 669 729 A1**
(43) Date of publication of application: **04.12.2013**
(21) Application number: 11856682.7
(22) Date of filing: 18.11.2011
(51) Int. Cl.: G02B 27/10, G02B 9/12, G02B 15/00, F21Y 101/02

(54) **CONDENSING SYSTEM AND METHOD WITH A PLURALITY OF LEDS, AND ITS APPLICATION IN IMAGING SYSTEM**

(30) Priority: 24.01.2011 CN 201120020563 U; 24.01.2011 CN 201120020565 U; 24.01.2011 CN 201110024386; 24.01.2011 CN 201120020562 U
(71) Applicant: Guangzhou Yajiang Photoelectric Equipment Co., Ltd, Guangdong 510880 (CN)
(72) Inventor: LI, Chunrong, Guangzhou Guangdong 510880 (CN)
(74) Representative: Lewin, David Nicholas
(86) International application number: PCT/CN2011/082394
(87) International publication number: WO 2012/100584

(57) **Abstract**

A multiple LED light beads light combining and collecting system and method, the LED light beads are on the same plane, a first collecting mirror is arranged on the front of each LED light bead; a second collecting mirror is arranged on the front of each first collecting mirror; a third collecting mirror is arranged on the front of each second collecting mirror; a fourth collecting mirror is arranged on the front of all the third collecting mirror; after the rays issued from each LED light bead are collected by its corresponding first collecting mirror, the second collecting mirror, and the third collecting mirror, the divergence angle of the rays become small, forming a bunch of nearly parallel rays, and bunches of nearly parallel rays are focused and mixed by the fourth collecting mirror at the same time. It can be used as an imaging system when using the above-mentioned collecting system as a light source, and adding a imaging mirror group. As to the multiple LED light beads light combining and collecting method, the processing and installation of the light source is easy, costs less, is easy to focus, and can achieve light combining within short distance, with even combined light.

## Description

### Field of the Invention

The invention relates to collecting and imaging of LED, particularly to light combining and collecting and imaging of flat multiple LED light beads.

### Background of the Invention

Focusing of light mainly needs two parts, the first is light source, and the second is focusing device. The existing light combining and collecting method of multiple LEDs usually achieves aim by changing the angle of light of each LED lamp bead of LED light source. For example, a LED focusing device, whose Chinese patent publication number is 201575340U, includes base and more than two LED lights; the LED light includes LED light source, equipped lens, lens holder and heat radiating column, the LED light source is installed at one end of the heat radiating column, the equipped lens is installed on the front of the LED light source and enwraps the LED light source, and the equipped lens is installed on the heat radiating column by the lens holder; the LED light is installed on the base by the heat radiating column, the base is an arcuate curved sheet, and the LED light is installed on the arcuate curved sheet. In the above-mentioned imaging device, the LED light source is installed on the arcuate curved sheet, and collects the light issued from the LED light depending on the angle of the arcuate curved sheet, and thus achieves the effect of light collecting. This kind of imaging device has the following defects: the arcuate curved sheet as part of the light source is hard to process, and its schedule requirements are high; the installation accuracy requirements are high; once the arc of the curved sheet is processed to be a mold, the position of the LED light source cannot be changed, and cannot be focused by the light source, only can be focused by lens group, the workload of collating the multiple lens in the imaging mirrors group is heavy, and is time-consuming; and the shot group used by the method of light collecting is big, the distance of light combining is long, the light combining is not uneven, resulting in high cost.

### Summary of the Invention

One of the technical problems to be solved by the present invention is to provide a multiple LED light beads light combining and collecting system used in lamp with the capability of imaging, the process and installation of flat light source are easy and have low cost; easy to focus, can achieving short-distance light combining, and the combined light is even, suitable for imaging.

The second technical problem to be solved by the present invention is to provide a multiple LED light beads light combining and collecting method used in lamp with the capability of imaging, the process and installation of light source are easy and have low cost; easy to focus, can achieving short-distance light combining, and the combined light is even.

The third technical problem to be solved by the present invention is to provide a multiple LED light beads light combining and imaging system with function of focusing, the process and installation of light source are easy, have low cost and easy to focus.

The fourth technical problem to be solved by the present invention is to provide a multiple LED light beads light combining and imaging system with function of zooming, the process and installation of light source are easy, have low cost and easy to focus.

To solve the above-mentioned first technical problem, the technical solution of the present invention is as follows: a multiple LED light beads light combining and collecting system, including light source, the said light source includes flat substrate, more than two LED light beads are arranged on the flat substrate, a first collecting mirror is arranged on the front of each LED light bead correspondingly, and all the first collecting mirrors form the first collecting mirror group; a second collecting mirror is arranged on the front of each of the first collecting mirror correspondingly, all the second collecting mirrors form the second collecting mirror group; a third collecting mirror is arranged on the front of each of the second collecting mirror correspondingly, all the third collecting mirrors form the third collecting mirror group; a fourth collecting mirror is arranged on the front of all of the third collecting mirrors. It is can be conducted that collecting the 80% light flux of divergent rays of single light bead into nearly parallel rays with small divergence by shot combination with small diameter, and then collecting multiple nearly parallel rays to the position near the focus point of the fourth collecting mirror by the fourth collecting mirror, and achieving the combination of the beams of multiple light beads. The light beads are on the same plane, easy to install, with easy process, easy to radiate heat, and with low cost; optical efficiency can be enhanced by 80%; short-distance light combining can be achieved, and the combined light is even.

As an improvement, the said first collecting mirror is an aspherical mirror, with conical coefficient of -0.85 to -0.6, curvature radius of 4.5 to 10mm, and diameter of 10 to 20 mm.

As an improvement, the said second collecting mirror is an ordinary spherical mirror, with curvature radius of the left convex of 20 to 60 mm, curvature radius of the right convex of 8 to 20 mm, and diameter of 10 to 20 mm.

As an improvement, the said third collecting mirror is a simple plano-convex mirror, with curvature radius of convex of 40 to 80mm, and diameter of 20 to 30mm.

As an improvement, the focal length of the said fourth collecting mirror is 80∼120mm, with diameter of 65∼75mm.

As an improvement, the distance between the said first collecting mirror and the second collecting mirror is 0∼3mm.

As an improvement, the distance between the said second collecting mirror and the third collecting mirror is 8∼15mm.

As an improvement, the distance between the said third collecting mirror and the fourth collecting mirror is 2∼50mm.

As an improvement, the edge thickness of the said first, second, third, and fourth collecting mirror are 1∼5mm.

To solve the above-mentioned second technical problem, the technical solution of the present invention is as follows: a multiple LED light beads light combining and collecting method, in the said collecting method, multiple LED light beads are on the same plane, a first collecting mirror is arranged on the front of each LED light bead, and all the first collecting mirrors form a first collecting mirror group; a second collecting mirror is arranged on the front of each first collecting mirror, and all the second collecting mirrors form a second collecting mirror group; a third collecting mirror is arranged on the front of each second collecting mirror, and all the third collecting mirrors form a third collecting mirror group; a fourth collecting mirror is arranged on the front of the said third collecting mirror; after the rays issued from each LED light bead are collected by its corresponding first collecting mirror, the second collecting mirror, and the third collecting mirror, the divergence angle of the rays become small, forming a bunch of nearly parallel rays, and bunches of nearly parallel rays are focused and mixed by the fourth collecting mirror at the same time, after the focusing and mixing, more than 60% of rays focus within the range of diameter of 20mm-60mm, and more than 60% of divergence angles of the rays are within 40 degree near the focus point of the fourth collecting mirror. It is can be conducted that collecting the 80% light flux of divergent rays of single light bead into nearly parallel rays with small divergence by shot combination with small diameter, and then collecting multiple nearly parallel rays to the position near the focus point of the fourth collecting mirror by the fourth collecting mirror, and achieving the combination of the beams of multiple light beads. The light beads are on the same plane, easy to install, with easy process, easy to radiate heat, and with low cost; optical efficiency can be enhanced by 80%; short-distance light combining can be achieved, and the combined light is even.

As an improvement, the said multiple LED light beads are arranged on the same flat substrate, the flat substrate is easy to process, saving cost; the installation accuracy requirements on the plane of the LED light bead is relatively low.

As an improvement, the said first collecting mirror is an aspherical mirror, with conical coefficient of -0.85 to -0.6, curvature radius of 4.5 to 10mm, diameter of 10 to 20 mm, and edge thickness of 1∼5mm; all the first collecting mirrors are on the same plane, and the first collecting mirror group conducts the first collecting on the rays issued from LED.

As an improvement, the said second collecting mirror is an spherical mirror, with curvature radius of the left convex of 20 to 60 mm, curvature radius of the right convex of 8 to 20 mm, and diameter of 10 to 20 mm, and edge thickness of 1∼5mm; all the second collecting mirrors are on the same plane, and the second collecting mirror group conducts the second collecting on the rays issued from LED.

As an improvement, the said third collecting mirror is an spherical mirror, with curvature radius of the convex of 40 to 80 mm, diameter of 20 to 30 mm, and edge thickness of 1∼5mm; all the third collecting mirrors are on the same plane, and the third collecting mirror group conducts the third collecting on the rays issued from LED.

As an improvement, the said fourth collecting mirror is a positive lens, non-Snell lens or ordinary spherical collecting mirror can be used, the focal length of the said fourth collecting mirror is 80∼120mm., with diameter of 65∼75mm, and edge thickness of 1∼5mm; the fourth collecting mirror focuses bunches of nearly parallel rays after three times of collecting on the focus point of the fourth collecting mirror. The distance of between the first collecting mirror and the second collecting mirror is 0∼3mm, the distance between the second collecting mirror and the third collecting mirror is 8∼15mm, and the distance between the third collecting mirror and the fourth collecting mirror.

To solve the above-mentioned third technical problem, the technical solution of the present invention is as follows: a multiple LED light beads combining and imaging system with function of focusing, including a light source, and an imaging mirror group arranged on the front of light source, the said light source includes a plane substrate, more than two LED light beads are arranged on the said flat substrate, a first collecting mirror is arranged on the front of each LED light bead corresponding, and all the first collecting mirrors form a first collecting mirror group; a second collecting mirror is arranged on the front of each first collecting mirror correspondingly, and all the second collecting mirrors form a second collecting mirror group; a third collecting mirror is arranged on the front of each second collecting mirror correspondingly, and all the third collecting mirrors form a third collecting mirror group; a fourth collecting mirror is arranged on the front of the said third collecting mirror group; the said imaging mirror group successively includes a first plano-convex mirror, a second plano-convex mirror and a third plano-convex mirror according to the direction of optical path. As to the light source of the imaging system, it is can be conducted that collecting the 80% light flux of divergent rays of single light bead into nearly parallel rays with small divergence by shot combination with small diameter, and then collecting multiple nearly parallel rays to the position near the focus point of the fourth collecting mirror by the fourth collecting mirror, and achieving the combination of the beams of multiple light beads. The light beads are on the same plane, easy to install, with easy process, easy to radiate heat, and with low cost; optical efficiency can be enhanced by 80%; short-distance light combining can be achieved, and the combined light is even. As for the imaging mirror group of the imaging system, the structure of the shot of the whole imaging system is simple, with low cost, clear imaging, big range of imaged object, which can reach 60 mm, and can hold many imaged object. The imaging system formed by the light source and imaging mirror group has high efficiency, can focus, and using high-power LED as light source costs low.

As an improvement, the said first collecting mirror is an aspherical mirror, with conical coefficient of -0.85∼-0.6, curvature radius of 4.5∼10 mm, and diameter of 10∼20mm; the said second collecting mirror is ordinary spherical mirror, with curvature radius of the left convex of 20-60 mm, curvature radius of the right convex of 8-20 mm, and diameter of 10∼20mm; the said third collecting mirror is a simple plano-convex mirror, with curvature radius of convex of 40 to 80mm, and diameter of 20 to 30mm; the focal length of the said fourth collecting mirror is 80∼120 mm, with diameter of 65∼75 mm.

As an improvement, the distance between the said first collecting mirror and the second collecting mirror is 0-3 mm; the distance between the said second collecting mirror and the third collecting mirror is 8∼15 mm; and the distance between the said third collecting mirror and the fourth collecting mirror is 2-50 mm.

As an improvement, the curvature radius of the right convex of the first plano-convex mirror is 70-85 mm, with diameter of 63-74 mm; the curvature radius of the right convex of the second plano-convex mirror is 120∼140 mm, with diameter of 65∼75 mm; curvature radius of the right convex of the third plano-convex mirror is 140∼160 mm, with diameter of 75-85 mm.

As an improvement, the distance between the said first plano-convex mirror and the second plano-convex mirror is 0∼3 mm; the first plano-convex mirror and the second plano-convex mirror form a focusing mirror group, and the said focusing mirror group is 25-60 mm behind the imaged object in the system; the said third plano-convex mirror is 150∼170 mm behind the imaged object in the system.

As an improvement, the edge thickness of the said first collecting mirror, the second collecting mirror, the third collecting mirror, the fourth collecting mirror, the first plano-convex mirror, the second plano-convex mirror, and the third plano-convex mirror are 1∼5 mm.

To solve the above-mentioned fourth technical problem, the technical solution of the present invention is as follows: a multiple LED light beads combining and imaging system with function of zooming, including a light source, and an imaging mirror group arranged on the front of light source, the said light source includes a plane substrate, more than two LED light beads are arranged on the said flat substrate, a first collecting mirror is arranged on the front of each LED light bead corresponding, and all the first collecting mirrors form a first collecting mirror group; a second collecting mirror is arranged on the front of each first collecting mirror correspondingly, and all the second collecting mirrors form a second collecting mirror group; a third collecting mirror is arranged on the front of each second collecting mirror correspondingly, and all the third collecting mirrors form a third collecting mirror group; a fourth collecting mirror is arranged on the front of the said third collecting mirror group; the said imaging mirror group successively includes a first plano-convex mirror, a second plano-convex mirror and a third plano-convex mirror according to the direction of optical path. As to the light source of the imaging system, it is can be conducted that collecting the 80% light flux of divergent rays of single light bead into nearly parallel rays with small divergence by shot combination with small diameter, and then collecting multiple nearly parallel rays to the position near the focus point of the fourth collecting mirror by the fourth collecting mirror, and achieving the combination of the beams of multiple light beads. The light beads are on the same plane, easy to install, with easy process, easy to radiate heat, and with low cost; optical efficiency can be enhanced by 80%; short-distance light combining can be achieved, and the combined light is even. As for the imaging mirror group of the imaging system, the range of imaged object of the system is big, which can reach 70 mm, and can deposit many imaged object; the imaging system formed by the light source and imaging mirror group has function of zooming in big range, can make the image of the imaged object at any distance outside 1 m behind the shot, and costs less, with high efficiency, clear image, can zoom and focus, and costs less using high-power LED as light source.

As an improvement, the said first collecting mirror is an aspherical mirror, with conical coefficient of -0.85∼-0.6, curvature radius of 4.5∼10 mm, and diameter of 10∼20mm; the said second collecting mirror is ordinary spherical mirror, with curvature radius of the left convex of 20-60 mm, curvature radius of the right convex of 8-20 mm, and diameter of 10∼20mm; the said third collecting mirror is a simple plano-convex mirror, with curvature radius of convex of 40 to 80mm, and diameter of 20 to 30mm; the focal length of the said fourth collecting mirror is 80∼120 mm, with diameter of 65∼75 mm.

As an improvement, the distance between the said first collecting mirror and the second collecting mirror is 0-3 mm; the distance between the said second collecting mirror and the third collecting mirror is 8∼15 mm; and the distance between the said third collecting mirror and the fourth collecting mirror is 2-50 mm.

As an improvement, the curvature radius of the right convex of the first plano-convex mirror is 60∼70 mm, with diameter of 65∼75 mm; the curvature radius of the left convex of the glued mirror is 400-420 mm, the curvature radius of the middle convex is 57-60 mm, the curvature radius of the right convex is 200-240 mm, and the diameter is 65-75 mm; the curvature radius of the left convex of the double convex mirror is 85-95 mm, the curvature radius of the right convex is 550-580 mm, and the diameter is 65-75 mm; the curvature radius of the left concave of the double concave mirror is 110∼130 mm, the curvature radius of the right convex is 300-330 mm, diameter is 65-75mm, and the thickness of the center is 2∼5mm; the curvature radius of the right convex of the said second plano-convex mirror is 100∼130mm., and the diameter is 115∼125mm.

As an improvement, the distance between the said first plano-convex mirror and the glued mirror is 0∼3 mm; the first plano-convex mirror, the glued mirror, and the double convex mirror form a focusing mirror group, the focusing mirror group is 30∼100 mm behind the imaged object, the double concave mirror is 120∼190 mm behind the imaged object, and the second plano-convex mirror is 210∼230 mm behind the imaged object.

As an improvement, the edge thickness of the said first collecting mirror, the second collecting mirror, the third collecting mirror, the fourth collecting mirror, the first plano-convex mirror, the double convex mirror, and the second plano-convex mirror are 1∼5 mm.

As an improvement, the LED light beads are distributed evenly, forming multi-point shining flat light source.

The advantageous effects produced by the present invention compared with the prior art are as follows:
1. The flat LED light group is easier to process, and the processing and installation accuracy requirements are not high;
2. Focusing can be done through the fourth collecting mirror, and focusing is quicker and easier.
3. The heat radiating of the flat LED light source is easy to conduct, and cost less;
4. The light source is collected four times; the optical efficiency is improved by 80%;
5. Light combining is achieved within short distance, and the combined light is even.
6. The first plano-convex mirror and the second plano-convex mirror form focusing mirror group, using for focusing of system in the imaging system, making the image outside 2 meters behind the shot clear;
7. The structure of the shot of the whole imaging system is simple, costing less, having clear image, with big range of imaged object, which can reach 60mm, and can deposit many imaged obj ect.
8. The range of the imaged object of the system is big, can reach 70mm, and can deposit many imaged object;
9. The system has function of zooming within big range, and makes the image of the imaged object at any distance outside 1 meter behind the shot, with low cost.

### Mode of Carrying Out the Invention

Fig. 1 is the top view of the collecting system of embodiments 1 to 6 of the present invention.
Fig.2 is A-A cutaway view of Fig.1.

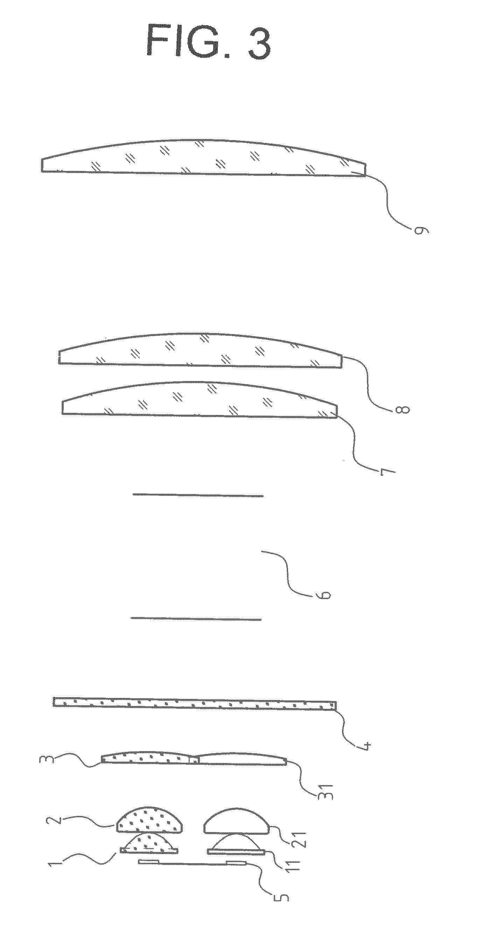

Fig.3 is the structure diagram of the imaging system of embodiments 7 to 9.

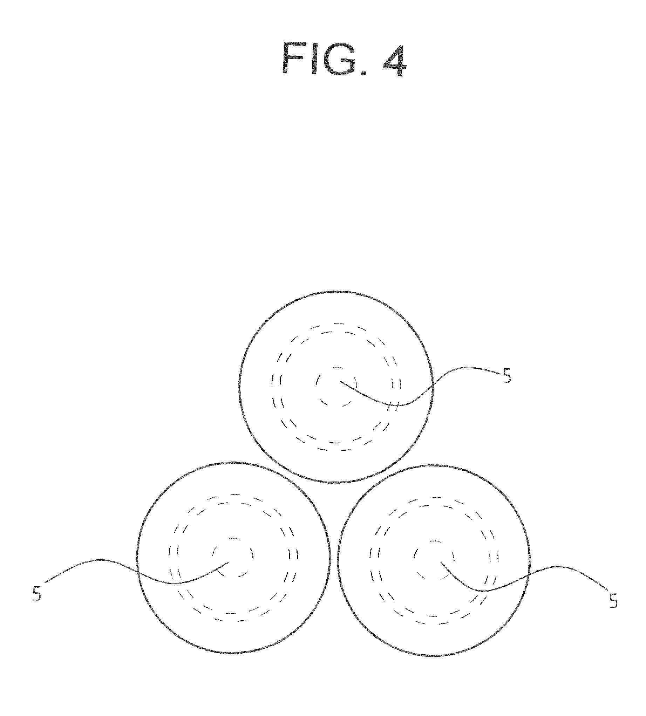

Fig.4 is the distribution view of the light beads of the light source of imaging system of embodiments 7 to 9.

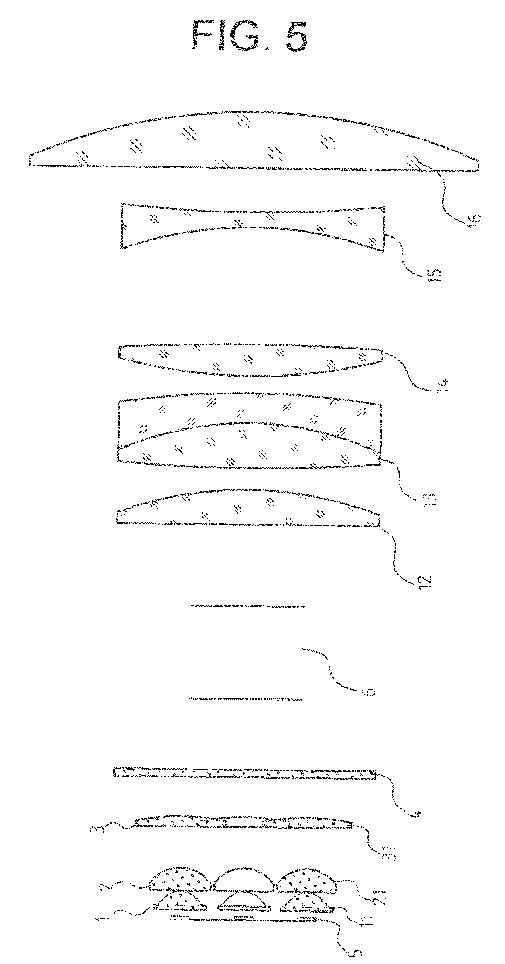

Fig.5 is the structure diagram of the imaging system of embodiments 10 to 12.

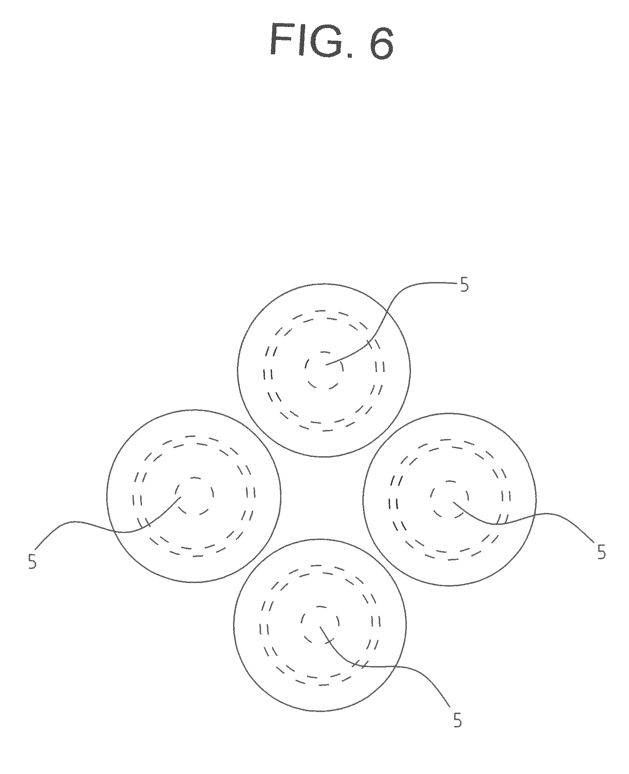

Fig.6 is the distribution view of the light beads of the light source of imaging system of embodiments 10 to 12.

Further illustration on the present invention will be given in the following in conjunction with drawings.

### Embodiment 1

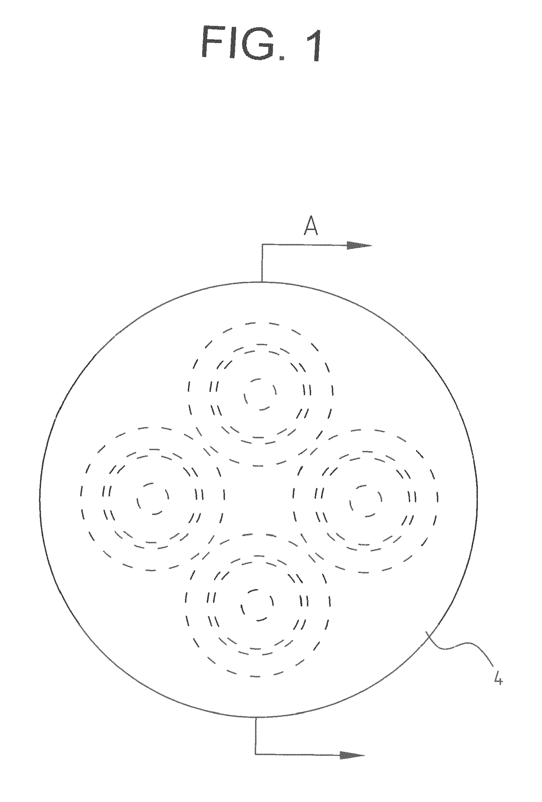

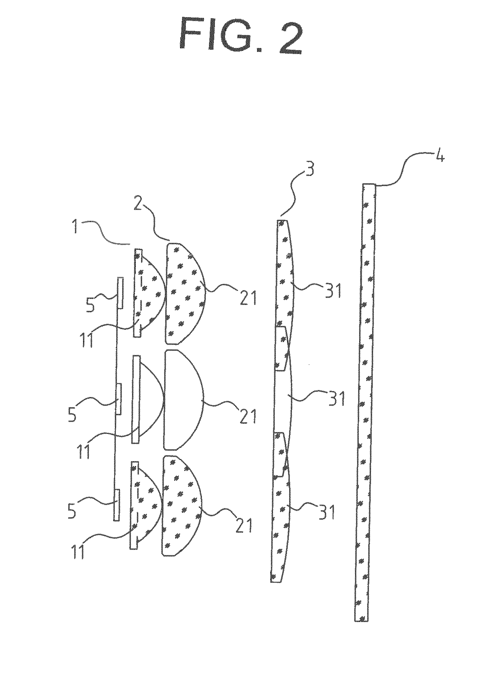

As shown in Fig.1 and Fig.2, a multiple LED light beads light combining and collecting system using for lamp capable of imaging, the said light combining and collecting system includes a flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.85, the curvature radius is 4.5mm, the diameter is 10mm, the edge thickness is 1 mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 20mm, right curvature radius is 8 mm, diameter is 10mm, and edge thickness is 1mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 40mm, the diameter is 20mm, and the edge thickness is 1mm, and the four third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 80mm, the diameter is 65mm, and the edge thickness is 1mm. The first collecting mirror 11, the second collecting mirror 21 and the third collecting mirror 31 form the collecting system, the distance between the said first collecting mirror and the second colleting mirror is 0mm, the distance between the said second collecting mirror and the third collecting mirror is 8mm, and the distance between the third collecting mirror and the fourth collecting mirror is 2mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Embodiment 2

As shown in Fig.1 and Fig.2, a multiple LED light beads light combining and collecting system using for lamp capable of imaging, the said light combining and collecting system includes a flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.7, the curvature radius is 7.0mm, the diameter is 15mm, the edge thickness is 3mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 40mm, right curvature radius is 14 mm, diameter is 15mm, and edge thickness is 3mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 60mm, the diameter is 25mm, and the edge thickness is 3mm, and the four third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 100mm, the diameter is 70mm, and the edge thickness is 3mm. The first collecting mirror 11, the second collecting mirror 21 and the third collecting mirror 31 form the collecting system, the distance between the said first collecting mirror and the second colleting mirror is 1.5mm, the distance between the said second collecting mirror and the third collecting mirror is 12mm, and the distance between the third collecting mirror and the fourth collecting mirror is 25mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Embodiment 3

As shown in Fig.1 and Fig.2, a multiple LED light beads light combining and collecting system using for lamp capable of imaging, the said light combining and collecting system includes a flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.6, the curvature radius is 10mm, the diameter is 20mm, the edge thickness is 5mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 60mm, right curvature radius is 20 mm, diameter is 20mm, and edge thickness is 5mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 80mm, the diameter is 30mm, and the edge thickness is 5mm, and the four third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 120mm, the diameter is 75mm, and the edge thickness is 5mm. The first collecting mirror 11, the second collecting mirror 21 and the third collecting mirror 31 form the collecting system, the distance between the said first collecting mirror and the second colleting mirror is 3mm, the distance between the said second collecting mirror and the third collecting mirror is 15mm, and the distance between the third collecting mirror and the fourth collecting mirror is 50mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

It can be seen from the above embodiments 1∼3 that, the flat LED light source is easy to process, the processing and installation accuracy requirements are not high; focusing can be done through the fourth collecting mirror 4, and it is quicker and easier to focus; the heat radiation of the flat LED light source is easy to conduct, with low cost; the optical efficiency is improved by 80%; light combining can be achieved within short distance, and the combined light is even. Three times of collecting are conducted evenly and descendingly, the beam angle of 120 degree issued from the LED light beads is collected to 70-80 degree through the first collecting mirror group 1 on the first time, collected to 30-40 degree through the second collecting mirror group 2 on the second time, collected to within 20 degree through the third collecting mirror group 3 on the third time, and collected near the focus point of the fourth collecting mirror 4 at last, more than 60% of rays are concentrated within the diameter range of 20mm-60mm, and more than 60% divergence angles of rays are within 40 degree, suitable for depositing imaged object.

### Embodiment 4

As shown in Fig.1 and Fig.2, a multiple LED light beads light combining and collecting method using for lamp capable of imaging, the light combining and collecting are conducted by the flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.85, the curvature radius is 4.5mm, the diameter is 10mm, the edge thickness is 1mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 20mm, right curvature radius is 8 mm, diameter is 10mm, and edge thickness is 1mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 40mm, the diameter is 20mm, and the edge thickness is 1mm, and the four third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 80mm, the diameter is 65mm, and the edge thickness is 1mm. The first collecting mirror 11, the second collecting mirror 21 and the third collecting mirror 31 form the collecting system, the distance between the said first collecting mirror and the second colleting mirror is 0mm, the distance between the said second collecting mirror and the third collecting mirror is 8mm, and the distance between the third collecting mirror and the fourth collecting mirror is 2mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Embodiment 5

As shown in Fig.1 and Fig.2, a multiple LED light beads light combining and collecting method using for lamp capable of imaging, the light combining and collecting are conducted by the flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.7, the curvature radius is 7.0mm, the diameter is 15mm, the edge thickness is 3mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 40mm, right curvature radius is 14mm, diameter is 15mm, and edge thickness is 3mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 60mm, the diameter is 25mm, and the edge thickness is 3mm, and the four third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 100mm, the diameter is 70mm, and the edge thickness is 3mm. The first collecting mirror 11, the second collecting mirror 21 and the third collecting mirror 31 form the collecting system, the distance between the said first collecting mirror and the second colleting mirror is 1.5mm, the distance between the said second collecting mirror and the third collecting mirror is 12mm, and the distance between the third collecting mirror and the fourth collecting mirror is 25mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Embodiment 6

As shown in Fig.1 and Fig.2, a multiple LED light beads light combining and collecting method using for lamp capable of imaging, the light combining and collecting are conducted by the flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.6, the curvature radius is 10mm, the diameter is 20mm, the edge thickness is 5mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 60mm, right curvature radius is 20mm, diameter is 20mm, and edge thickness is 5mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 80mm, the diameter is 30mm, and the edge thickness is 5mm, and the four third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 120mm, the diameter is 75mm, and the edge thickness is 5mm. The first collecting mirror 11, the second collecting mirror 21 and the third collecting mirror 31 form the collecting system, the distance between the said first collecting mirror and the second colleting mirror is 3mm, the distance between the said second collecting mirror and the third collecting mirror is 15mm, and the distance between the third collecting mirror and the fourth collecting mirror is 50mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

It can be seen from the above embodiments 4-6 that, three times of collecting are conducted evenly and descendingly, the beam angle of 120 degree issued from the LED light beads is collected to 70-80 degree through the first collecting mirror group 1 on the first time, collected to 30-40 degree through the second collecting mirror group 2 on the second time, collected to within 20 degree through the third collecting mirror group 3 on the third time, and collected near the focus point of the fourth collecting mirror 4 at last, more than 60% of rays are concentrated within the diameter range of 20mm-60mm, and more than 60% divergence angles of rays are within 40 degree, suitable for depositing imaged object.

The flat LED light source is easier to process, the processing and installation accuracy requirements are not high, focusing can be conducted through the fourth collecting mirror 4, focusing is quicker and easier; the heat radiation of the flat LED light source is easy to conduct, with low cost; the optical efficiency is improved by 80%; light combining can be achieved within short distance and the combined light is even. As four 60W LED light beads for example, they can be used for zooming imaging system after focusing and combining, exited beam angle is zoomed from 12 degree to 40 degree, the average illuminance of 1 meter spot can reach 4500Lx, but as for the same kind of lamp of the traditional HID light source, the average illuminance of 1 meter spot of 575W is about 6500Lx.

### Embodiment 7

A multiple LED light beads light combining and imaging system, including light source, and imaging mirror group arranged on the front of the light source.

### Light source

As shown in Fig.1 and Fig.2, the said light source is flat light source, the flat light source includes a flat substrate, multiple LED light beads 5 are distributed evenly on the said flat substrate, there arranged three LED light beads 5 on the whole in the present embodiment, the three LED light beads 5 on the same plane form the flat light source. A first collecting mirror 11 is arranged on the front of each LED light bead 5, the said first collecting mirror 11 is aspherical mirror, the conical coefficient is -0.85, the curvature radius is 4.5 mm, the diameter is 10 mm, the edge thickness is 1 mm, the three first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 20 mm, right curvature radius is 8 mm, diameter is 10 mm, and edge thickness is 1 mm, and the three second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 40 mm, the diameter is 20 mm, and the edge thickness is 1 mm, and the three third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 80mm, the diameter is 65 mm, and the edge thickness is 1 mm. The first collecting mirror 11, the second collecting mirror 21 and the third collecting mirror 31 form the collecting system, the distance between the said first collecting mirror and the second colleting mirror is 0 mm, the distance between the said second collecting mirror and the third collecting mirror is 8 mm, and the distance between the third collecting mirror and the fourth collecting mirror is 2 mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Imaging mirror group

As shown in Fig.1, there arranged a first plano-convex mirror 7, a second plano-convex mirror 8, and a third plano-convex mirror 9 on the direction of optical path sucessively. The curvature radius of right convex of the said first plano-convex mirror 7 is 70 mm, with edge thickness of 1 mm, and diameter of 63 mm; The curvature radius of right convex of the said second plano-convex mirror 8 is 120 mm, with edge thickness of 1 mm, and diameter of 65 mm; The curvature radius of right convex of the said third plano-convex mirror 9 is 140 mm, with edge thickness of 1 mm, and diameter of 75 mm. The distance between the said first plano-convex mirror 7 and the second plano-convex mirror 8 is 0 mm; the said first plano-convex mirror 7 and the second plano-convex mirror 8 form a focusing mirror group, and the focusing mirror group is 25 mm behind the imaged object 4 in the system; the said third plano-convex mirror 9 is 150 mm behind the imaged object 4 in the system. The first plano-convex mirror 7 and the second plano-convex mirror 8 form a focusing mirror group, using for focusing of system in the imaging system, and making the image outside 2 meters behind the shot clear; the structure of the shot of the whole imaging system is simple, costs less, and has clear image, and the range of the imaged object 4 is big, which can reach 60 mm and deposit many imaged object.

### Embodiment 8

A multiple LED light beads light combining and imaging system, including light source, and imaging mirror group arranged on the front of the light source.

### Light source

As shown in Fig.1 and Fig.2, the said light source is flat light source, the flat light source includes a flat substrate, multiple LED light beads 5 are distributed evenly on the said flat substrate, there arranged three LED light beads 5 on the whole in the present embodiment, the three LED light beads 5 on the same plane form the flat light source. A first collecting mirror 11 is arranged on the front of each LED light bead 5, the said first collecting mirror 11 is aspherical mirror, the conical coefficient is -0.7, the curvature radius is 7.0 mm, the diameter is 15 mm, the edge thickness is 3 mm, the three first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 40 mm, right curvature radius is 14 mm, diameter is 15 mm, and edge thickness is 3 mm, and the three second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 60 mm, the diameter is 25 mm, and the edge thickness is 3 mm, and the three third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 100 mm, the diameter is 70 mm, and the edge thickness is 3 mm. The first collecting mirror 11, the second collecting mirror 21 and the third collecting mirror 31 form the collecting system, the distance between the said first collecting mirror and the second colleting mirror is 1.5 mm, the distance between the said second collecting mirror and the third collecting mirror is 12 mm, and the distance between the third collecting mirror and the fourth collecting mirror is 25 mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Imaging mirror group

As shown in Fig.1, there arranged a first plano-convex mirror 7, a second plano-convex mirror 8, and a third plano-convex mirror 9 on the direction of optical path sucessively. The curvature radius of right convex of the said first plano-convex mirror 7 is 80 mm, with edge thickness of 3 mm, and diameter of 68 mm; The curvature radius of right convex of the said second plano-convex mirror 8 is 130 mm, with edge thickness of 3 mm, and diameter of 70 mm; The curvature radius of right convex of the said third plano-convex mirror 9 is 150 mm, with edge thickness of 3 mm, and diameter of 80 mm. The distance between the said first plano-convex mirror 7 and the second plano-convex mirror 8 is 1.5 mm; the said first plano-convex mirror 7 and the second plano-convex mirror 8 form a focusing mirror group, and the focusing mirror group is 45 mm behind the imaged object 4 in the system; the said third plano-convex mirror 9 is 160 mm behind the imaged object 4 in the system. The first plano-convex mirror 7 and the second plano-convex mirror 8 form a focusing mirror group, using for focusing of system in the imaging system, and making the image outside 2 meters behind the shot clear; the structure of the shot of the whole imaging system is simple, costs less, and has clear image, and the range of the imaged object 4 is big, which can reach 60 mm and deposit many imaged object.

### Embodiment 9

A multiple LED light beads light combining and imaging system, including light source, and imaging mirror group arranged on the front of the light source.

### Light source

As shown in Fig.1 and Fig.2, the said light source is flat light source, the flat light source includes a flat substrate, multiple LED light beads 5 are distributed evenly on the said flat substrate, there arranged three LED light beads 5 on the whole in the present embodiment, the three LED light beads 5 on the same plane form the flat light source. A first collecting mirror 11 is arranged on the front of each LED light bead 5, the said first collecting mirror 11 is aspherical mirror, the conical coefficient is -0.6, the curvature radius is 10 mm, the diameter is 20 mm, the edge thickness is 5 mm, the three first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 60 mm, right curvature radius is 20 mm, diameter is 20 mm, and edge thickness is 5 mm, and the three second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 80 mm, the diameter is 30 mm, and the edge thickness is 5 mm, and the three third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 120 mm, the diameter is 75 mm, and the edge thickness is 5 mm. The first collecting mirror 11, the second collecting mirror 21 and the third collecting mirror 31 form the collecting system, the distance between the said first collecting mirror and the second colleting mirror is 3 mm, the distance between the said second collecting mirror and the third collecting mirror is 15 mm, and the distance between the third collecting mirror and the fourth collecting mirror is 50 mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Imaging mirror group

As shown in Fig.1, there arranged a first plano-convex mirror 7, a second plano-convex mirror 8, and a third plano-convex mirror 9 on the direction of optical path successively. The curvature radius of right convex of the said first piano-convex mirror 7 is 85 mm, with edge thickness of 5 mm, and diameter of 74 mm; The curvature radius of right convex of the said second plano-convex mirror 8 is 140 mm, with edge thickness of 5 mm, and diameter of 75 mm; The curvature radius of right convex of the said third plano-convex mirror 9 is 160 mm, with edge thickness of 5 mm, and diameter of 85 mm. The distance between the said first plano-convex mirror 7 and the second plano-convex mirror 8 is 3 mm; the said first plano-convex mirror 7 and the second plano-convex mirror 8 form a focusing mirror group, and the focusing mirror group is 60 mm behind the imaged object 4 in the system; the said third plano-convex mirror 9 is 170 mm behind the imaged object 4 in the system. The first plano-convex mirror 7 and the second plano-convex mirror 8 form a focusing mirror group, using for focusing of system in the imaging system, and making the image outside 2 meters behind the shot clear; the structure of the shot of the whole imaging system is simple, costs less, and has clear image, and the range of the imaged object 4 is big, which can reach 60 mm and deposit many imaged object.

It can be seen from the above embodiments 7∼9 that, three times of collecting are conducted evenly and descendingly, the beam angle of 120 degree issued from the LED light beads is collected to 70-80 degree through the first collecting mirror group 1 on the first time, collected to 30-40 degree through the second collecting mirror group 2 on the second time, collected to within 20 degree through the third collecting mirror group 3 on the third time, and collected near the focus point of the fourth collecting mirror 4 at last, more than 60% of rays are concentrated within the diameter range of 20mm-60mm, and more than 60% divergence angles of rays are within 40 degree, suitable for depositing imaged object. The efficiency of the imaging system formed by the light source and the imaging mirror group is high, can focus, the image is clear, and using high-power LED as light source costs low.

### Embodiment 10

A multiple LED light beads light combining and imaging system, including light source, and imaging mirror group arranged on the front of the light source.

### Light source

As shown in Fig.1 and Fig.2, the said light source is flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.85, the curvature radius is 4.5 mm, the diameter is 10 mm, the edge thickness is 1 mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 20 mm, right curvature radius is 8 mm, diameter is 10 mm, and edge thickness is 1 mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 40 mm, the diameter is 20 mm, and the edge thickness is 1 mm, and the three third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 80 mm, the diameter is 65 mm, and the edge thickness is 1 mm. The first collecting mirror 11, the second collecting mirror 21 and the third collecting mirror 31 form the collecting system, the distance between the said first collecting mirror and the second colleting mirror is 0 mm, the distance between the said second collecting mirror and the third collecting mirror is 8 mm, and the distance between the third collecting mirror and the fourth collecting mirror is 2 mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Imaging mirror group

As shown in Fig. 1, there arranged a first plano-convex mirror 12, a glued mirror 13, double convex mirror 14, double concave mirror 15, and a second plano-convex mirror 16 according to the optical path successively. The curvature radius of the right convex of the said first plano-convex mirror 12 is 60 mm, with diameter of 65 mm, and edge thickness of 1 mm. As to the glued mirror 13, the curvature radius of the left convex is 400 mm, the curvature radius of the middle convex is 57 mm, the curvature radius of the right convex is 200 mm, and the diameter is 65 mm. As to the double convex mirror 14, the curvature radius of the left convex is 85 mm, the curvature radius of the right convex is 550 mm, the diameter is 65 mm, and the edge thickness is 1 mm. As to the double concave mirror 15, the curvature radius of the left concave is 110, the curvature radius of the right convex is 300 mm, the diameter is 65 mm, and the thickness of the center is 2 mm. The curvature radius of the right convex of the second plano-convex mirror 16 is 100 mm, the diameter is 115 mm, and the edge thickness is 1 mm. The distance between the said first plano-convex mirror 12 and the glued mirror 13 is 0 mm, the distance between the glued 13 and the double convex mirror 14 is 0 mm; The said first plano-convex mirror 12, the glued mirror 13, and the double convex mirror 14 form a focusing mirror group, the said focusing mirror group is 30 mm behind the imaged object 6, the double concave mirror 15 is 120 mm behind the imaged object 6, and the second plano-convex mirror 16 is 210 mm behind the imaged object 6. The glued mirror 13 is used for reduce the aberration of system, the focusing mirror group is used for focusing of system in the imaging system, and the double concave mirror 15 is used for removing the aberration of system and achieving zooming. The range of the imaged object 6 of system is big, which can reach 70 mm and deposit many imaged object 6; the system has large range of zooming function, makes the image of the imaged object 6 clear at any distance outside 1 meter behind the shot, and costs less.

### Embodiment 11

A multiple LED light beads light combining and imaging system, including light source, and imaging mirror group arranged on the front of the light source.

### Light source

As shown in Fig.1 and Fig.2, the said light source is flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.7, the curvature radius is 7.0 mm, the diameter is 15 mm, the edge thickness is 3 mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 40 mm, right curvature radius is 14 mm, diameter is 15 mm, and edge thickness is 3 mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 60 mm, the diameter is 25 mm, and the edge thickness is 3 mm, and the three third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 100 mm, the diameter is 70 mm, and the edge thickness is 3 mm. The first collecting mirror 11, the second collecting mirror 21 and the third collecting mirror 31 form the collecting system, the distance between the said first collecting mirror and the second colleting mirror is 1.5 mm, the distance between the said second collecting mirror and the third collecting mirror is 12 mm, and the distance between the third collecting mirror and the fourth collecting mirror is 25 mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Imaging mirror group

As shown in Fig. 1, there arranged a first plano-convex mirror 12, a glued mirror 13, double convex mirror 14, double concave mirror 15 and a second plano-convex mirror 16 according to the optical path successively. The curvature radius of the right convex of the said first plano-convex mirror 12 is 65 mm, with diameter of 70 mm, and edge thickness of 3 mm. As to the glued mirror 13, the curvature radius of the left convex is 410 mm, the curvature radius of the middle convex is 58.5 mm, the curvature radius of the right convex is 220 mm, and the diameter is 70 mm. As to the double convex mirror 14, the curvature radius of the left convex is 90 mm, the curvature radius of the right convex is 565 mm, the diameter is 70 mm, and the edge thickness is 3 mm. As to the double concave mirror 15, the curvature radius of the left concave is 120, the curvature radius of the right convex is 315 mm, the diameter is 70 mm, and the thickness of the center is 3.5 mm. The curvature radius of the right convex of the second plano-convex mirror 16 is 115 mm, the diameter is 120 mm, and the edge thickness is 3 mm. The distance between the said first plano-convex mirror 12 and the glued mirror 13 is 1.5 mm, the distance between the glued 13 and the double convex mirror 14 is 1.5 mm; The said first plano-convex mirror 12, the glued mirror 13, and the double convex mirror 14 form a focusing mirror group, the said focusing mirror group is 65 mm behind the imaged object 6, the double concave mirror 15 is 155 mm behind the imaged object 6, and the second plano-convex mirror 16 is 220 mm behind the imaged object 6. The glued mirror 13 is used for reduce the aberration of system, the focusing mirror group is used for focusing of system in the imaging system, and the double concave mirror 15 is used for removing the aberration of system and achieving zooming. The range of the imaged object 6 of system is big, which can reach 70 mm and deposit many imaged object 6; the system has large range of zooming function, makes the image of the imaged object 6 clear at any distance outside 1 meter behind the shot, and costs less.

### Embodiment 12

A multiple LED light beads light combining and imaging system, including light source, and imaging mirror group arranged on the front of the light source.

### Light source

As shown in Fig.1 and Fig.2, the said light source is flat light source, the flat light source includes a flat substrate, multiple LED light beads 5 are distributed evenly on the said flat substrate, there arranged four LED light beads 5 on the whole in the present embodiment, the four LED light beads 5 on the same plane form the flat light source. A first collecting mirror 11 is arranged on the front of each LED light bead 5, the said first collecting mirror 11 is aspherical mirror, the conical coefficient is -0.6, the curvature radius is 10 mm, the diameter is 20 mm, the edge thickness is 5 mm, the four first collecting mirrors 11 are on the same plane and form a first collecting mirror group 1, conducting the first collecting on rays issued from LED. A second collecting mirror 21 is arranged on the front of each first collecting mirror 11, the said second collecting mirror 21 is an ordinary spherical mirror, its left curvature radius is 60 mm, right curvature radius is 20 mm, diameter is 20 mm, and edge thickness is 5 mm, and the four second collecting mirrors 21 are on the same plane and form a second collecting mirror group 2, conducting the second collecting on the rays issued from LED. A third collecting mirror 31 is arranged on the front of each second collecting mirror 21 correspondingly, the said third collecting mirror 31 is a simple plano-convex mirror, its curvature radius of convex is 80 mm, the diameter is 30 mm, and the edge thickness is 5 mm, and the three third collecting mirrors 31 are on the same plane and form a third collecting mirror group 3, conducting the third collecting on the rays issued from LED. A fourth collecting mirror 4 is arranged on the front of the third collecting mirror group 3, the said fourth collecting mirror 4 is a non-Snell lens, the focal distance of the fourth collecting mirror is 120 mm, the diameter is 75 mm, and the edge thickness is 5 mm. The first collecting mirror 11, the second collecting mirror 21 and the third collecting mirror 31 form the collecting system, the distance between the said first collecting mirror and the second colleting mirror is 3 mm, the distance between the said second collecting mirror and the third collecting mirror is 15 mm, and the distance between the third collecting mirror and the fourth collecting mirror is 50 mm, it can be conducted that collecting the 80% light flux of divergent rays of single light bead into nearly parallel rays with small divergence by shot combination with small diameter, and then collecting multiple nearly parallel rays to the position near the focus point of the fourth collecting mirror 4 by the fourth collecting mirror 4, and achieving the combination of the beams of multiple light beads.

### Imaging mirror group

As shown in Fig. 1, there arranged a first plano-convex mirror 12, a glued mirror 13, double convex mirror 14, double concave mirror 15, and a second plano-convex mirror 16 according to the optical path successively. The curvature radius of the right convex of the said first plano-convex mirror 12 is 70 mm, with diameter of 75 mm, and edge thickness of 5 mm. As to the glued mirror 13, the curvature radius of the left convex is 420 mm, the curvature radius of the middle convex is 60 mm, the curvature radius of the right convex is 240 mm, and the diameter is 75 mm. As to the double convex mirror 14, the curvature radius of the left convex is 95 mm, the curvature radius of the right convex is 580 mm, the diameter is 75 mm, and the edge thickness is 5 mm. As to the double concave mirror 15, the curvature radius of the left concave is 130, the curvature radius of the right convex is 330 mm, the diameter is 75 mm, and the thickness of the center is 5 mm. The curvature radius of the right convex of the second plano-convex mirror 16 is 130 mm, the diameter is 125 mm, and the edge thickness is 5 mm. The distance between the said first plano-convex mirror 12 and the glued mirror 13 is 3 mm, the distance between the glued 13 and the double convex mirror 14 is 3 mm; The said first plano-convex mirror 12, the glued mirror 13, and the double convex mirror 14 form a focusing mirror group, the said focusing mirror group is 100 mm behind the imaged object 6, the double concave mirror 15 is 190 mm behind the imaged object 6, and the second plano-convex mirror 16 is 230 mm behind the imaged object 6. The glued mirror 13 is used for reduce the aberration of system, the focusing mirror group is used for focusing of system in the imaging system, and the double concave mirror 15 is used for removing the aberration of system and achieving zooming. The range of the imaged object 6 of system is big, which can reach 70 mm and deposit many imaged object 6; the system has large range of zooming function, makes the image of the imaged object 6 clear at any distance outside 1 meter behind the shot, and costs less.

It can be seen from the above embodiments 10∼12 that, three times of collecting are conducted evenly and descendingly, the beam angle of 120 degree issued from the LED light beads is collected to 70-80 degree through the first collecting mirror group 1 on the first time, collected to 30-40 degree through the second collecting mirror group 2 on the second time, collected to within 20 degree through the third collecting mirror group 3 on the third time, and collected near the focus point of the fourth collecting mirror 4 at last, more than 60% of rays are concentrated within the diameter range of 20mm-60mm, and more than 60% divergence angles of rays are within 40 degree, suitable for depositing imaged object. The imaging system formed by the light source and the imaging mirror group has large range of zooming function, can make the image of imaged object clear at any distance outside 1 meter behind the shot, costs less, has high efficiency, has clear image, can zoom and focus, and using high-power LED as light source costs low.

## Claims

1. A multiple LED light beads light combing and collecting system, **characterized in that**, including light source, the said light source includes a flat substrate, more than two LED light beads are arranged on the said flat substrate, a first collecting mirror is arranged on the front of each LED light bead correspondingly, all the first collecting mirrors form a first collecting mirror group; a second collecting mirror is arranged on the front of each first collecting mirror correspondingly, all the second collecting mirrors form a second collecting mirror group; a third collecting mirror is arranged on the front of each second collecting mirror correspondingly, all the third collecting mirrors form a third collecting mirror group; and a fourth collecting mirror is arranged on the front of the said third collecting mirror group.

2. The multiple LED light beads light combing and collecting system as claimed in claim 1, **characterized in that**, the said first collecting mirror is an aspherical mirror, with conical coefficient of -0.85 to -0.6, curvature radius of 4.5 to 10mm, and diameter of 10 to 20 mm.

3. The multiple LED light beads light combing and collecting system as claimed in claim 1, **characterized in that**, the said second collecting mirror is an ordinary spherical mirror, whose curvature radius of the left convex is 20-60 mm, curvature radius of the right convex is 8-20 mm, and diameter is 10∼20 mm.

4. The multiple LED light beads light combing and collecting system as claimed in claim 1, **characterized in that**, the said third collecting mirror is a simple plano-convex mirror, whose curvature radius of convex is 40-80mm, and diameter is 20∼30mm.

5. The multiple LED light beads light combing and collecting system as claimed in claim 1, **characterized in that**, the focal length of the said fourth collecting mirror is 80∼120 mm, with diameter of 65∼75 mm.

6. The multiple LED light beads light combing and collecting system as claimed in claim 1, **characterized in that**, the distance between the said first collecting mirror and the second collecting mirror is 0∼3mm.

7. The multiple LED light beads light combing and collecting system as claimed in claim 1, **characterized in that**, the distance between the said second collecting mirror and the third collecting mirror is 8∼15mm.

8. The multiple LED light beads light combing and collecting system as claimed in claim 1, **characterized in that**, the distance between the said third collecting mirror and the fourth collecting mirror is 2-50 mm.

9. The multiple LED light beads light combing and collecting system as claimed in claim 1, **characterized in that**, the edge thickness of the said first, second, third, and fourth collecting mirror are 1∼5 mm.

10. A multiple LED light beads light combining and collecting method, **characterized in that**, in the said collecting method, the multiple LED light beads are on the same plane, a first collecting mirror is arranged on the front of each LED light bead, all the first collecting mirrors form a first collecting mirror group; a second collecting mirror is arranged on the front of each first collecting mirror, all the second collecting mirrors form a second collecting mirror group; a third collecting mirror is arranged on the front of each second collecting mirror, all the third collecting mirrors form a third collecting mirror group; a fourth collecting mirror is arranged on the front of the said third collecting mirror; after the rays issued from each LED light bead are collected by its corresponding first collecting mirror, the second collecting mirror, and the third collecting mirror, the divergence angle of the rays become small, forming a bunch of nearly parallel rays, and bunches of nearly parallel rays are focused and mixed by the fourth collecting mirror at the same time, after the focusing and mixing, more than 60% of rays focus within the range of diameter of 20mm-60mm, and more than 60% of divergence angles of the rays are within 40 degree near the focus point of the fourth collecting mirror.

11. The multiple LED light beads light combing and collecting method as claimed in claim 10, **characterized in that**, the said multiple LED light beads are arranged on the same flat substrate.

12. The multiple LED light beads light combing and collecting method as claimed in claim 10, **characterized in that**, the said first collecting mirror is an aspherical mirror, all the first collecting mirrors are on the same plane, and the first collecting mirror group conducts the first collecting on the rays issued from LED.

13. The multiple LED light beads light combing and collecting method as claimed in claim 10, **characterized in that**, the said second collecting mirror is an spherical mirror, all the second collecting mirrors are on the same plane, and the second collecting mirror group conducts the second collecting on the rays issued from LED.

14. The multiple LED light beads light combing and collecting method as claimed in claim 10, **characterized in that**, the said third collecting mirror is an spherical mirror, all the third collecting mirrors are on the same plane, and the third collecting mirror group conducts the third collecting on the rays issued from LED.

15. The multiple LED light beads light combing and collecting method as claimed in claim 10, **characterized in that**, the said fourth collecting mirror is a positive lens, the fourth collecting mirror focuses bunches of nearly parallel rays after three times of collecting on the focus point of the fourth collecting mirror.

16. The multiple LED light beads light combing and collecting method as claimed in claim 10, **characterized in that**, the LED light beads are distributed evenly, forming multi-point shining flat light source.

17. A multiple LED light beads combining and imaging system with function of focusing, including a light source, and an imaging mirror group arranged on the front of light source, the said light source includes a plane substrate, more than two LED light beads are arranged on the said flat substrate, a first collecting mirror is arranged on the front of each LED light bead corresponding, all the first collecting mirrors form a first collecting mirror group; a second collecting mirror is arranged on the front of each first collecting mirror correspondingly, all the second collecting mirrors form a second collecting mirror group; a third collecting mirror is arranged on the front of each second collecting mirror correspondingly, all the third collecting mirrors form a third collecting mirror group; a fourth collecting mirror is arranged on the front of the said third collecting mirror group; the said imaging mirror group successively includes a first plano-convex mirror, a second plano-convex mirror and a third plano-convex mirror according to the direction of optical path.

18. The multiple LED light beads combining and imaging system with function of focusing as claimed in claim 17, **characterized in that**, the said first collecting mirror is an aspherical mirror, with conical coefficient of -0.85∼-0.6, curvature radius of 4.5∼10 mm, and diameter of 10∼20mm; the said second collecting mirror is ordinary spherical mirror, whose curvature radius of the left convex is 20-60 mm, curvature radius of the right convex is 8-20 mm, and diameter is 10∼20mm; the said third collecting mirror is a simple plano-convex mirror, whose curvature radius of convex is 40-80mm, and diameter is 20∼30mm; the focal length of the said fourth collecting mirror is 80∼120 mm, with diameter of 65-75 mm.

19. The multiple LED light beads combining and imaging system with function of focusing as claimed in claim 17, **characterized in that**, the distance between the said first collecting mirror and the second collecting mirror is 0-3 mm; the distance between the said second collecting mirror and the third collecting mirror is 8∼15 mm; and the distance between the said third collecting mirror and the fourth collecting mirror is 2∼50 mm.

20. The multiple LED light beads combining and imaging system with function of focusing as claimed in claim 17, **characterized in that**, the curvature radius of the right convex of the first plano-convex mirror is 70∼85 mm, with diameter of 63∼74 mm; the curvature radius of the right convex of the second plano-convex mirror is 120∼140 mm, with diameter of 65∼75 mm; curvature radius of the right convex of the third plano-convex mirror is 140∼160 mm, with diameter of 75∼85 mm.

21. The multiple LED light beads combining and imaging system with function of focusing as claimed in claim 17, **characterized in that**, the distance between the said first plano-convex mirror and the second plano-convex mirror is 0∼3 mm; the first plano-convex mirror and the second plano-convex mirror form a focusing mirror group, and the said focusing mirror group is 25∼60 mm behind the imaged object in the system; the said third plano-convex mirror is 150∼170 mm behind the imaged object in the system.

22. The multiple LED light beads combining and imaging system with function of focusing as claimed in claim 17, **characterized in that**, the edge thickness of the said first collecting mirror, the second collecting mirror, the third collecting mirror, the fourth collecting mirror, the first plano-convex mirror, the second plano-convex mirror, and the third plano-convex mirror are 1∼5 mm.

23. A multiple LED light beads combining and imaging system with function of zooming, including a light source, and an imaging mirror group arranged on the front of light source, **characterized in that**, the said light source includes a plane substrate, more than two LED light beads are arranged on the said flat substrate, a first collecting mirror is arranged on the front of each LED light bead corresponding, and all the first collecting mirrors form a first collecting mirror group; a second collecting mirror is arranged on the front of each first collecting mirror correspondingly, and all the second collecting mirrors form a second collecting mirror group; a third collecting mirror is arranged on the front of each second collecting mirror correspondingly, and all the third collecting mirrors form a third collecting mirror group; a fourth collecting mirror is arranged on the front of the said third collecting mirror group; the said imaging mirror group successively includes a first plano-convex mirror, a glued mirror, a double convex mirror, a double concave mirror, and a second plano-convex mirror according to the direction of optical path.

24. The multiple LED light beads combining and imaging system with function of zooming as claimed in claim 23, **characterized in that**, the said first collecting mirror is an aspherical mirror, with conical coefficient of -0.85∼-0.6, curvature radius of 4.5-10 mm, and diameter of 10∼20 mm; the said second collecting mirror is ordinary spherical mirror, whose curvature radius of the left convex is 20∼60 mm, curvature radius of the right convex is 8∼20 mm, and diameter is 10∼20mm; the said third collecting mirror is a simple plano-convex mirror, whose curvature radius of convex is 40 to 80mm, and diameter is 20 to 30mm; the focal length of the said fourth collecting mirror is 80∼120 mm, with diameter of 65∼75 mm.

25. The multiple LED light beads combining and imaging system with function of zooming as claimed in claim 23, **characterized in that**, the distance between the said first collecting mirror and the second collecting mirror is 0∼3 mm; the distance between the said second collecting mirror and the third collecting mirror is 8∼15 mm; and the distance between the said third collecting mirror and the fourth collecting mirror is 2∼50 mm.

26. The multiple LED light beads combining and imaging system with function of zooming as claimed in claim 23, **characterized in that**, the curvature radius of the right convex of the first plano-convex mirror is 60∼70 mm, with diameter of 65∼75 mm; the curvature radius of the left convex of the glued mirror is 400∼420 mm, whose curvature radius of the middle convex is 57∼60 mm, curvature radius of the right convex is 200∼240 mm, and diameter is 65∼75 mm; the curvature radius of the left convex of the double convex mirror is 85∼95 mm, whose curvature radius of the right convex is 550∼580 mm, and diameter is 65∼75 mm; the curvature radius of the left concave of the double concave mirror is 110∼130 mm, whose curvature radius of the right convex is 300∼330 mm, diameter is 65∼75mm, and thickness of the center is 2∼5mm; the curvature radius of the right convex of the said second plano-convex mirror is 100∼130mm, whose diameter is 115∼125mm.

27. The multiple LED light beads combining and imaging system with function of zooming as claimed in claim 23, **characterized in that**, the distance between the said first plano-convex mirror and the glued mirror is 0∼3 mm; the first plano-convex mirror, the glued mirror, and the double convex mirror form a focusing mirror group, the focusing mirror group is 30∼100 mm behind the imaged object, the double concave mirror is 120∼190 mm behind the imaged object, and the second plano-convex mirror is 210∼230 mm behind the imaged object.

28. The multiple LED light beads combining and imaging system with function of zooming as claimed in claim 23, **characterized in that**, the edge thickness of the said first collecting mirror, the second collecting mirror, the third collecting mirror, the fourth collecting mirror, the first plano-convex mirror, the double convex mirror, and the second plano-convex mirror are 1∼5 mm.
